# EUROPÄISCHE PATENTANMELDUNG

(11) **EP 1 054 365 A2**
(43) Veröffentlichungstag der Anmeldung: **22.11.2000**
(21) Anmeldenummer: 00110244.1
(22) Anmeldetag: 19.05.2000
(51) Int. Cl.: G07F 7/10, G06K 19/073

(54) **Manipulationsgeschütztes Betriebsprogramm von Chipkarten**

(30) Priorität: 20.05.1999 DE 19923232
(71) Anmelder: Beta Research GmbH, 85774 Unterföhring (DE)
(72) Erfinder: Mester, Roland, 81827 München (DE)
(74) Vertreter: Heselberger, Johannes

(57) **Zusammenfassung**

Chipkarte mit einer Karte und einem darauf angebrachten Chip, wobei der Chip eine Eingangs-/Ausgangsschnittstelle aufweist, und wobei der Chip unter einem auf dem Chip gespeicherten Betriebssystem betrieben wird, wobei mindestens eine Funktion des Betriebssystems auf dem Chip in festen Logik-Gattern realisiert ist.

## Beschreibung

Die vorliegende Erfindung betrifft eine Vorrichtung und ein Verfahren zur Sicherung von Daten auf einer Chipkarte, insbesondere gegen Manipulation, d.h. unberechtigte Eingriffe in Form von Lesen, Kopieren und Verändern der Daten.

Chipkarten werden für die unterschiedlichsten Anwendungen verwendet. Dies fängt an bei Telefonkarten, Bibliothek-Benutzer-Ausweise, Krankenkassenkarten und geht über Zugangsberechtigungen bis zu Geldkarten. Bei allen diesen Verwendungen befinden sich wichtige Informationen auf dem Chip der Karte, die über die Inhaber oder über Guthaben der Inhaber Aufschluß geben. Da diese Informationen sowohl für den einzelnen, als auch für andere von großem Interesse sind, wird immer wieder versucht an die Daten in der Chipkarte heranzukommen und diese dann auszulesen, zu verändern oder auf eine andere Karte zu kopieren.

Die Chips auf den Chipkarten sind trotz unterschiedlicher Anwendungen und unterschiedlicher Hersteller nahezu identisch. Damit diese Chipkarten unterschiedliche Funktionen übernehmen können, wird auf dem Chip ein von der Funktion abhängiges Betriebssystem gespeichert. Der Code des Betriebssystems ist für den Start der Verwendung der Chipkarte unbedingt notwendig. Üblicherweise wird für die Speicherung des Codes ein ROM (Read Only Memory) verwendet. Unabhängig von der Aufgabe der Chipkarte können deshalb von allen Chipkarten die gespeicherten Daten ausgelesen werden, indem man das ROM freilegt und seinen Inhalt mittels eines Raster-Elektronenmikroskops analysiert und ausliest.

So können zum Beispiel durch ein Raster-Elektronenmikroskop die in einem ROM gespeicherten Daten betrachtet und unter Verwendung von Standardwerkzeugen der Bildverarbeitung ausgelesen werden. Zwar befindet sich über dem ROM eine metallische Deckschicht, die zur Betrachtung des Speicherinhalts erst abgeätzt werden muß, aber diese kann ohne Probleme entfernt werden.

In dem Europäischen Patent EP 0 458 306 wird eine IC-Karte mit einem Chip beschrieben, der aus mehreren Schichten besteht. Die zu schützenden Informationen, in diesem Beispiel Informationen zur Verschlüsselung von Daten, werden hier in einer Schicht gespeichert, die von mehreren anderen Schichten überdeckt wird, so daß die Daten nicht direkt optisch ausgelesen werden können.

In dem Artikel 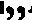 Dongles: Hardware schützt Software" von Manfred Keul in der Zeitschrift 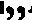 Elektronik" vom 10./11. Juni 1990 werden Verfahren vorgestellt, bei denen durch Verwendung von sogenannter Schlüssel-Hardware Software gegen unberechtigtes Kopieren geschützt wird. Dabei kann die Schlüssel-Hardware unterschiedliche Funktionen übernehmen, wie zum Beispiel die Speicherung eines Teils des Programmcodes, der für die Ausführung der zu schützenden Software notwendig ist.

Außerdem gibt es Verfahren mit denen die Daten in dem ROM so verschlüsselt werden können, daß die Daten nicht ohne weiteres verwendet werden können. Aber auch bei diesen Verfahren gibt es zahlreiche Ansätze um, zum Beispiel aus statistischen Informationen von mehreren betrachteten Speichern, auf den Inhalt zu schließen.

Die Aufgabe der Erfindung ist deshalb die Bereitstellung einer Chipkarte bei der die Manipulation, also das Auslesen, Kopieren und Verändern des auf der Chipkarte gespeicherten Betriebssystem Codes, wesentlich erschwert wird.

Die Lösung dieser Aufgabe besteht in der Vorrichtung und dem Verfahren, wie sie in den unabhängigen Ansprüchen beschrieben sind.

Erfindungsgemäß wird eine Chipkarte mit einer Karte, beispielsweise aus Kunststoff, und einem drauf angebrachten Chip bereitgestellt, wobei der Chip eine Eingangs-/Ausgangsschnittstelle aufweist, und wobei der Chip unter einem auf dem Chip vorhandenen Betriebssystem betrieben wird, wobei mindestens eine Funktion des Betriebssystems auf dem Chip in festen Logik-Gattern realisiert ist.

Unter Verwendung von Softwaretools können aus der Wahrheitstabelle des Betriebssystems Logik-Gatter generiert werden. Die einzelnen Logikfunktionen werden dann mit aktiven logischen Bauelementen umgesetzt und anschließend in Form einer integrierten Schaltung auf dem Chip realisiert. Diese anwendungsspezifische integrierte Schaltung hat den Vorteil, daß die Daten nicht so einfach ausgelesen werden können. Dies liegt unter anderen daran, daß aus einer Wahrheitstabelle unter Verwendung von handelsüblichen Softwaretools eine Vielzahl unterschiedlicher Logik-Gatter generiert werden und diese Gatter auf dem Chip wiederum auf eine Vielzahl unterschiedliche Arten angeordnet werden können.

Die einzelnen Bauelemente können zwar noch immer durch Betrachtung ausgemacht werden, aber die Verdrahtung der Gatter, kann nur unter größtem Aufwand freigelegt werden, da diese Verdrahtung auf mehreren Ebenen erfolgt. Zu diesem Zweck müssen die einzelnen Schichten von dem Chip abgeschliffen oder abgeätzt und dann analysiert werden. Die dann freigelegten Informationen in der Gatter-Logik sind im Gegensatz zu denen in einem ROM völlig unstrukturiert. Außerdem kann der unter Verwendung von Gatter-Logik gegossene Betriebssystem Code garantiert nicht verändert werden und benötigt erfahrungsgemäß für die Implementierung auch weniger Platz.

Vorzugsweise befinden sich die genannten Logik-Gatter unter einem Versorgungs-Ring, beziehungsweise Power-Ring, zur Versorgung des Chips mit Spannung, wodurch sie keinen zusätzlichen Platz benötigen. Besonders bevorzugt ist die Logik in den genannten Logik-Gattern gegenüber Standardlösungen hochgradig umstrukturiert. Dafür werden Logik-Synthese-Tools und Bibliotheken mit Hunderten von Gattertypen als Basis verwendet.

Die vorliegende Erfindung bezieht sich auch auf ein Verfahren zur Sicherung von Betriebssystem Code auf einer Chipkarte, wobei die Chipkarte eine Karte und einen darauf angebrachten Chip aufweist und der Chip eine Eingangs-/ Ausgangsschnittstelle besitzt, und wobei der Chip unter einem auf dem Chip vorhandenen Betriebssystem betrieben wird, wobei mindestens eine Funktion des Betriebssystems, die auf dem Chip unter Verwendung von festen Logik-Gattern gespeichert ist, verwendet wird.

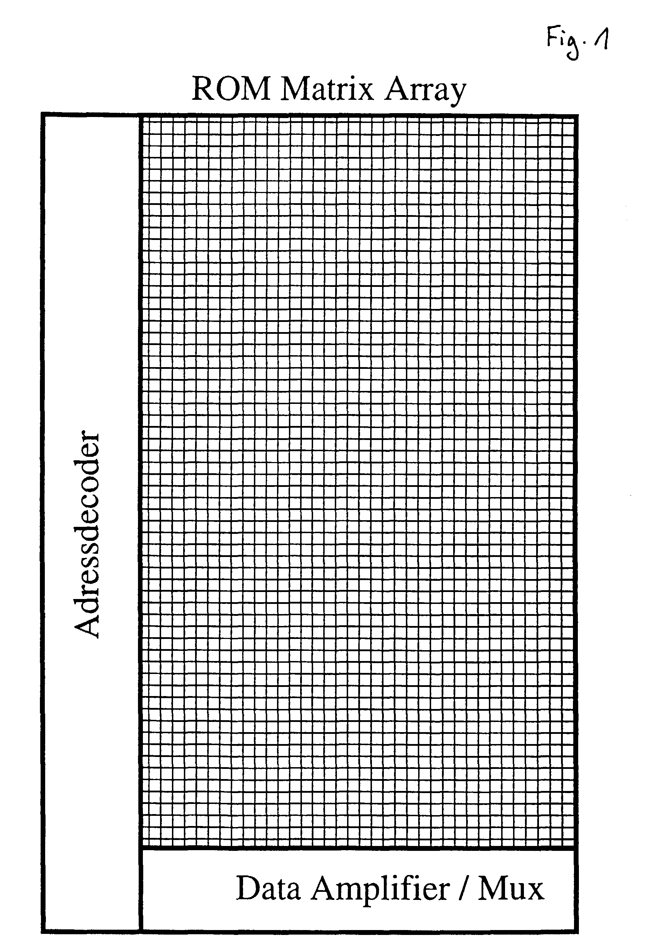

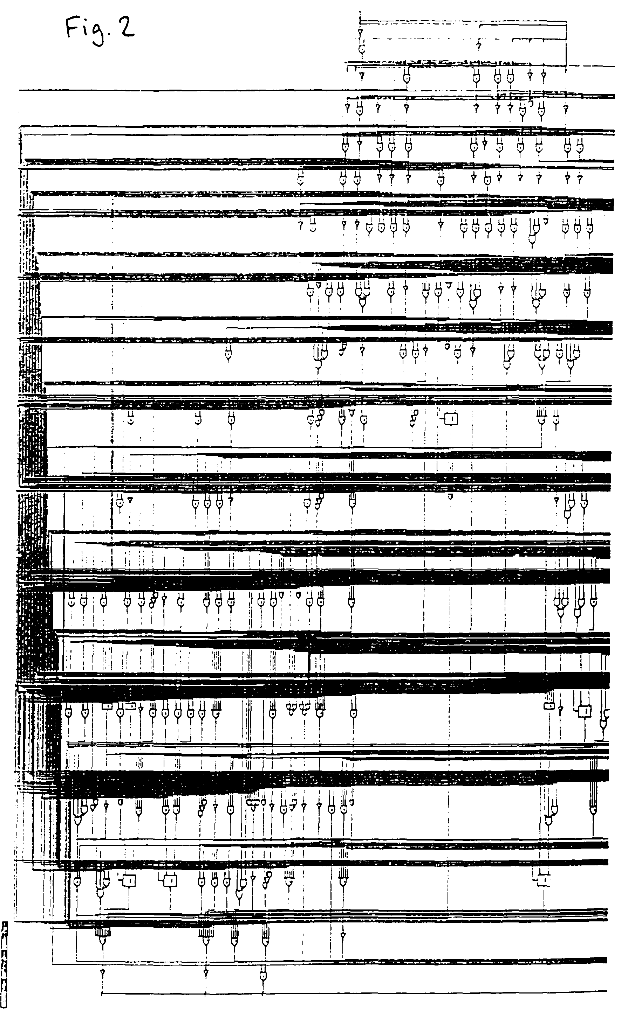

Die vorliegende Erfindung kann beispielhaft durch die Figuren 1 und 2 dargestellt werden, wobei
Figur 1 ein Beispiel für eine Ansicht eines ROMs und
Figur 2 ein Beispiel für eine Ansicht eines in Gatter-Logik umgesetzten Betriebssystem Codes darstellt.

In der Ansicht des ROMs in Figur 1, stellt jeder Kreuzungspunkt des Gitters ein bit Information dar. Bei genauer Betrachtung durch ein Raster-Elektronenmikroskop kann ausgelesen werden, um welches bit es sich handelt und darüber auf die Informationen in dem ROM geschlossen werden. Außerdem können durch die Verwendung eines Fokussierten Ionenstrahls einzelne bits verändert werden.

Bei der in Figur 2 dargestellten Gatter-Logik ist diese Veränderung der Information unmöglich. Hier wird außerdem durch die unterschiedlichen Ebenen und die unstrukturierte Verteilung von einzelnen Funktionen das Auslesen des Betriebssystem Codes wesentlich erschwert.

Die vorliegende Erfindung stellt damit eine Chipkarte und ein Verfahren zur Verfügung, bei denen das Auslesen und Kopieren des auf der Chipkarte gespeicherten Betriebssystem Codes wesentlich erschwert und das Verändern der Informationen verhindert wird.

## Patentansprüche

1. Chipkarte mit einer Karte und einem darauf angebrachten Chip, wobei der Chip eine Eingangs-/Ausgangsschnittstelle aufweist, und wobei der Chip unter einem auf dem Chip gespeicherten Betriebssystem betrieben wird,
**dadurch gekennzeichnet, daß**
mindestens eine Funktion des Betriebssystems auf dem Chip in festen Logik-Gattern realisiert ist.

2. Chipkarte nach Anspruch 1, dadurch gekennzeichnet, daß sich die genannten Logik-Gatter unter einem Versorgungs-Ring befinden.

3. Chipkarte nach einem der Ansprüche 1 oder 2, dadurch gekennzeichnet, daß die Logik in den genannten Logik-Gattern gegenüber Standardlösungen hochgradig umstrukturiert ist.

4. Verfahren zur Sicherung von Daten auf einer Chipkarte, wobei die Chipkarte eine Karte und einen darauf angebrachten Chip aufweist und der Chip eine Eingangs-/Ausgangsschnittstelle besitzt, und wobei der Chip unter einem auf dem Chip vorhandenen Betriebssystem betrieben wird,
**dadurch gekennzeichnet, daß**
mindestens eine Funktion des Betriebssystems, die auf dem Chip unter Verwendung von festen Logik-Gattern gespeichert ist, verwendet wird.
